(19) Europäisches Patentamt
European Patent Office
Office européen des brevets

(11) EP 3 654 479 A1

# (12) EUROPÄISCHE PATENTANMELDUNG

(43) Veröffentlichungstag:
**20.05.2020 Patentblatt 2020/21**

(51) Int Cl.:
***H02H 9/00*** *(2006.01)*

(21) Anmeldenummer: **18206787.6**

(22) Anmeldetag: **16.11.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
- **Handt, Karsten**
  **92348 Berg (DE)**
- **Hänsel, Stefan**
  **91083 Baiersdorf (DE)**

## (54) SCHUTZSCHALTUNG FÜR EIN STROMKREISELEMENT MIT MINDESTENS EINER FUNKTIONALEN AUSRICHTUNG ALS VORLADEWIDERSTAND

(57) Die Erfindung betrifft ein ansteuerbares Stromkreiselement mit mindestens einer funktionalen Ausrichtung als Vorladewiderstand (7), insbesondere für die Verwendung in einem Stromverteilungsnetz, ein Schaltbild mit einem ansteuerbaren Stromkreiselement mit mindestens einer funktionalen Ausrichtung als Vorladewiderstand (7), ein Stromverteilungsnetz mit mindestens einem Lastabzweig, wobei in einem Leistungspfad eines Leistungsabzweigs ein ansteuerbares Stromkreiselement mit mindestens einer funktionalen Ausrichtung als Vorladewiderstand angeordnet ist, ein Verfahren zum Schutz eines ansteuerbaren Stromkreiselements mit mindestens einer funktionalen Ausrichtung als Vorladewiderstand (7), insbesondere in einer Verwendung in einem Stromverteilungsnetz, sowie die Verwendung eines ansteuerbaren Stromkreiselements mit mindestens einer funktionalen Ausrichtung als Vorladewiderstand (7) in Automatisierungsanlagen, in der Antriebstechnik oder der Leistungselektronik.

Die Erfindung zeichnet sich dadurch aus, dass der Schutz des Stromkreiselements (7) vor Überlastung durch eine übergeordnete Steuerungseinheit ausgebildet ist, welche mittels eines Messgeräts Messwerte aufnimmt und diese Messwerte einem ordnungsgemäßen Vorladevorgang oder einer Überlastung zuordnet.

FIG 3

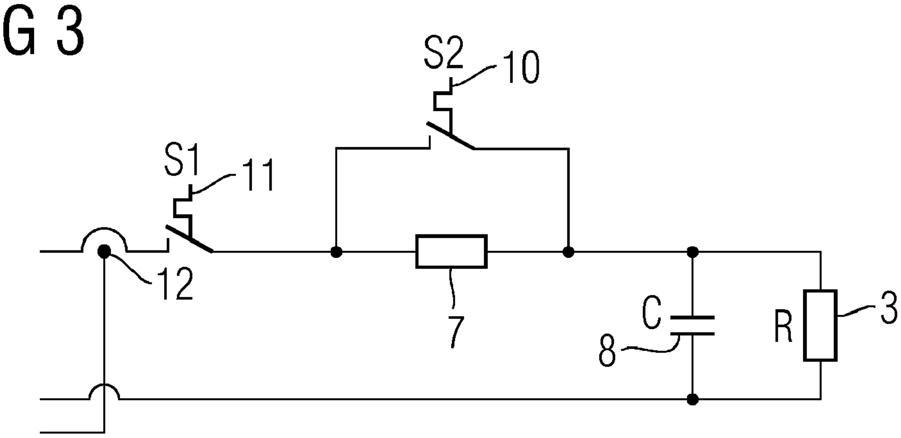


EP 3 654 479 A1

## Beschreibung

Die Erfindung betrifft ein ansteuerbares Stromkreiselement mit mindestens einer funktionalen Ausrichtung als Vorladewiderstand, insbesondere für die Verwendung in einem Stromverteilungsnetz, ein Schaltbild, insbesondere eine Schutzschaltung mit einem ansteuerbaren Stromkreiselement mit mindestens einer funktionalen Ausrichtung als Vorladewiderstand, ein Stromverteilungsnetz mit mindestens einem Lastabzweig, wobei in einem Leistungspfad eines Leistungsabzweigs ein ansteuerbares Stromkreiselement mit mindestens einer funktionalen Ausrichtung als Vorladewiderstand angeordnet ist, ein Verfahren zum Schutz eines ansteuerbaren Stromkreiselements mit mindestens einer funktionalen Ausrichtung als Vorladewiderstand, insbesondere in einer Verwendung in einem Stromverteilungsnetz, sowie die Verwendung eines ansteuerbaren Stromkreiselements mit mindestens einer funktionalen Ausrichtung als Vorladewiderstand in Automatisierungsanlagen, in der Antriebstechnik oder der Leistungselektronik.

Das Zuschalten von kapazitiven Lasten verursacht immer einen großen Ausgleichstrom. Besonders in DC-Applikationen wie Zwischenkreisen oder DC-Netzen, in welchen mehrere Kondensatoren zusammengeschaltet werden, ist der Zuschaltstrom sehr groß und überschreitet ein Vielfaches des Nennstromes. Da dieser Strom Bauteile zerstören und einen überlagerten Schutz auslösen kann, muss dieser Strom begrenzt werden. Die Begrenzung erfolgt üblicher Weise mittels eines Vorladewiderstand Rv. Dabei wird ein Widerstand in Reihe zum Leistungspfad geschaltet, über welchem der Strom begrenzt wird. Sind alle Kapazitäten ausreichend vorgeladen, wird dieser Widerstand mittels eines Schalters überbrückt und der Leistungspfad freigegeben.

Bei dieser Vorgehensweise muss der Vorladewiderstand für eine gewisse Verlustenergie ausgelegt werden. Die Verluste, welche während der Vorladung entstehen, sind besonders am Anfang groß, wenn die gesamte DC-Spannung über dem Widerstand abfällt, während er den Vorladestrom führt. Übersteigt der Wert der vorzuladenden Kapazität den Auslegungsfall oder liegt ein Kurzschluss im Vorladepfad vor, wird der Widerstand überlastet und überhitzt. Aus diesem Grund muss er gegen Überlastung geschützt werden.

Aus dem Stand der Technik ist bekannt, Vorladewiderstände hauptsächlich durch sogenannte Thermistoren zu schützen. Thermistoren verändern ihren Widerstandswert in Abhängigkeit von der Temperatur und werden in Reihe zum Vorladewiderstand geschaltet.

Sie schützen den Vorladewiderstand dadurch, dass sie durch Eigenerwärmung bei einer Überlastung des Vorladenetzwerks ihren Widerstandswert soweit erhöhen, dass der Strom signifikant sinkt. Der Nachteil dieser Lösung besteht darin, dass einerseits ein zusätzliches Bauteil verbaut werden muss, welches die Fehleranfälligkeit erhöht, und andererseits die Vorladung nur durch nicht steuerbare Komponenten geschützt ist. Der Thermistor muss dabei genau auf den Vorladewiderstand abgestimmt sein, um ihn effektiv zu schützen. Wird er zu großzügig ausgelegt, kann der Vorladewiderstand zerstört werden, wird er zu konservativ ausgelegt, behindert er die Vorladung von großen Kapazitäten.

Ein weiterer großer Nachteil dieser bekannten Schaltung besteht darin, dass parallel zum vorzuladenden Kondensator auch immer ein Widerstand liegt. Dieser kann physikalisch als Entladekondensator der vorzuladenden Kondensatoren vorliegen oder als Verbraucher, welcher am DC-Abzweig liegt. Am Anfang des Vorladevorgangs ist der Thermistor noch kalt und sein Widerstandswert somit gering. Zu Beginn der Vorladung ist der Kondensator entladen und die gesamte Spannung fällt über dem Vorladewiderstand ab. Dies hat einen hohen Stromfluss zur Folge. Zum Ende der Vorladung wird der Thermistor warm, wodurch sein Widerstandswert steigt. Die treibende Spannung über Thermistor und Vorladewiderstand ist dann nur noch gering, weil der Kondensator in diesem Fall fast vollständig geladen ist. Als Resultat fließt nur noch ein sehr kleiner Vorladestrom, so dass bis zum Abschluss der Vorladung viel Zeit vergehen kann. Im ungünstigsten Fall kann der Vorladevorgang nicht finalisiert werden. An dieser aus dem Stand der Technik bekannten Vorgehensweise ist ersichtlich, dass ein Schutz des Vorladewiderstands zwar notwendig ist, aber der Thermistor für die normale Vorladung hinderlich ist, da er gerade am Ende, wenn der Widerstand eher kleiner werden müsste, seinen Widerstandswert erhöht.

Demgemäß besteht die Aufgabe der vorliegenden Erfindung darin, ein verbessertes Schutzkonzept für Stromkreiselemente mit mindestens einer funktionalen Ausrichtung als Vorladewiderstand in der Umgebung eines Stromverteilungsnetzes zu schaffen sowie ein dazugehöriges Verfahren und mögliche Anwendungen anzugeben.

Diese Aufgabe wird erfindungsgemäß durch ein ansteuerbares Stromkreiselement mit mindestens einer funktionalen Ausrichtung als Vorladewiderstand, insbesondere für die Verwendung in einem Stromverteilungsnetz nach Anspruch 1, durch ein Schaltbild, insbesondere einer Schutzschaltung mit einem ansteuerbaren Stromkreiselement mit mindestens einer funktionalen Ausrichtung als Vorladewiderstand nach Anspruch 12, durch ein Stromverteilungsnetz mit mindestens einem Lastabzweig, wobei in einem Leistungspfad eines Leistungsabzweigs ein ansteuerbares Stromkreiselement mit mindestens einer funktionalen Ausrichtung als Vorladewiderstand angeordnet ist nach Anspruch 22, durch ein Verfahren zum Schutz eines ansteuerbaren Stromkreiselements mit mindestens einer funktionalen Ausrichtung als Vorladewiderstand, insbesondere in einer Verwendung in einem Stromverteilungsnetz nach Anspruch 32 sowie durch dessen Verwendung in Automatisierungsanlagen, in der Antriebstechnik oder der Leistungselektronik gemäß der Ansprüche 41, 42 und 43 gelöst. Vorteilhafte Aus- und Weiterbildungen, welche einzeln oder in Kombination miteinander eingesetzt werden können, sind jeweils der Gegenstand der abhängigen Ansprüche.

Erfindungsgemäß wird diese Aufgabe durch ein ansteuerbares Stromkreiselement mit mindestens einer funktionalen Ausrichtung als Vorladewiderstand innerhalt einer Schalteinheit, insbesondere für die Verwendung in einem Stromverteilungsnetz gelöst, wobei der Schutz des Stromkreiselements vor Überlastung über eine übergeordnete Steuerungseinheit ausgebildet ist, welche mittels eines Messgerätes Messwerte aufnimmt und diese Messwerte einem ordnungsgemäßen Vorladevorgang oder einer Überlastung zuordnet.

Das erfindungsgemäße Stromkreiselement mit mindestens einer funktionalen Ausrichtung als Vorladewiderstand ist durch die übergeordnete Steuerungseinheit, welche über ein, vorzugsweise zusätzlich eingesetztes oder in der Steuerungseinheit integriertes, Messgerät das Monitoring für das Stromkreiselement übernimmt, ansteuerbar ausgeführt. Aus dem Stand der Technik ist, wie oben ausgeführt, kein ansteuerbarer Vorladewiderstand bekannt. Der Kern der Erfindung besteht hier darin, dass das ansteuerbare Stromkreiselement mit mindestens einer funktionalen Ausrichtung als Vorladewiderstand durch die übergeordnete Steuerungseinheit in Kombination mit einem Messgerät gekennzeichnet ist. Diese Einheit aus Steuerungseinheit in Kombination mit einem Messgerät und dem ansteuerbaren Stromkreiselement mit mindestens einer funktionalen Ausrichtung als Vorladewiderstand ist das Grundgerüst bzw. die wesentliche Schalteinheit für die weitergehenden Anwendungen in einem Schaltbild, insbesondere einer Schutzschaltung und einem Stromverteilungsnetz, insbesondere DC- oder Hybridnetz. Die Schalteinheit umfasst demgemäß das ansteuerbare Stromkreiselement mit mindestens einer funktionalen Ausrichtung als Vorladewiderstand sowie die übergeordnete Steuerungseinheit und das Messgerät.

Eine Vorladung wird äußerst selten als separates Gerät verbaut. Vielmehr wird die Funktion Vorladung immer in einem größeren Gerät benutzt bspw. einem Umrichter oder einem DC-Schalter.

Bei diesen Geräten ist die Messung einiger betriebsrelevanter Größen ohnehin notwendig. Da der Vorladewiderstand von einer übergeordneten Steuerungseinheit, welche am Gerät integriert oder weiter außerhalb im Bereich einer Kommunikationsschnittstelle des Netzes angeordnet sein kann, geschaltet werden kann, kann diese mit Hilfe von speziellen Messungen auch den notwendigen Schutz des Vorladewiderstands bzw. des Stromkreiselements gewährleisten.

Als Messungen kommen hier der DC-Strom oder die Eingangs- und Ausgangsspannung in Frage. Aus der Eingangs- und Ausgangsspannung kann über das Ohm'sche Gesetz entsprechend auch der DC-Strom berechnet werden:

$$I(t) = (U_{ein}(t) - U_{aus}(t))/R_V$$

Mit dieser Information kann die Steuerung entscheiden, ob es sich um einen normalen Vorladevorgang handelt, welcher durch den Vorladewiderstand in Form des erfindungsgemäßen Stromkreiselements abgedeckt ist, oder der Vorladewiderstand überlastet wird.

Die einfachste Ausführung einer solchen Überprüfung betrachtet nach einer gewissen Zeit, in der die Vorladung normalerweise abgeschlossen sein sollte, ob der Stromfluss weiterhin größer ist als ein vorgegebener Wert. Etwas aufwendigere Ausführungen überprüfen in unterschiedlichen Zeitschritten, ob ein Stromfluss jeweils unter einem getrennt vorgegebenen Wert liegt.

Bspw. wird nach einer halben Sekunde überprüft, ob der Stromfluss bereits um mindestens 10% gesunken ist, bzw. die Spannung der vorzuladenden Seite auf mindestens 10% gestiegen ist. Weitere Messungen können bspw. nach 4,5 Sekunden zu 50%, nach 20 Sekunden zu 96% erfolgen. Ist der Stromfluss zu einem beliebigen Zeitpunkt größer bzw. die zu betrachtende Spannung kleiner als der vorgegebene Wert, wird die Vorladung abgebrochen.

Als fortführendes Ausführungsbeispiel kann entweder die Vorladung nur in eine Richtung zugelassen werden, also unidirektional. Es muss dann gelten dass $I_{DC} > 0$ ist während der Vorladung.

Als weiteres Ausführungsbeispiel kann aber auch gelten, dass die Vorladung bidirektional durchgeführt werden kann, also nur der Betrag des Stroms überprüft wird.

Neben der Ausführung als gestufte Überwachung, kann auch eine integrale Überwachung durchgeführt werden. Dabei wird über die Verlustleistung des Widerstands integriert und mit einem Maximalwert verglichen.

$$\int_{vorladung\ start}^{vorladung\ Ende} P_{verlust} = \int_{vorladung\ start}^{vorladung\ Ende} i^2 \cdot R_v < E_{Verlust\ Auslegung}$$

Der Maximalwert ergibt sich aus der Wahl des Widerstands und beschreibt die Energie, die der Widerstand pro Vorladung aufnehmen kann, bevor er überhitzt. Dieser Wert kann auch variabel gestaltet werden. Beispielsweise in Abhängigkeit von der Temperatur des Widerstands zu Beginn der Vorladung und der Umgebungstemperatur, inklusive unter Berücksichtigung einer zeitlichen Abkühlkurve.

Der Vorteil dieser Erfindung besteht darin, dass der Vorladewiderstand bzw. das erfindungsgemäße Stromkreiselement mit mindestens einer Ausrichtung als Vorladewiderstand nicht mehr durch Thermistoren geschützt wird, welche die Vorladung stark limitieren, sondern durch eine digitale Steuerung. Auf diese Art und Weise ist es möglich, den Vorladewiderstand besser auszunutzen und ihn zudem besser zu schützen. Die Umsetzung dieses erfindungsgemäßen digitalen Konzepts in einem DC-Schalter ermöglicht außerdem den positiven Effekt, dass zusätzliche Informationen über das DC-Netz gewonnen werden können wie beispielsweise die verbaute Kapazität.

Es entspricht einer speziellen Ausführungsform des erfindungsgemäßen Konzepts, dass das Stromkreiselement mit mindestens einer funktionalen Ausrichtung als Vorladewiderstand weitere Funktionen innerhalb eines Schaltbildes oder Stromverteilungsnetzes aufweist, insbesondere als Messgerät, Verbraucher, Prosumer, Umrichter oder Ähnliches. Das Stromkreiselement mit mindestens einer Ausrichtung als Vorladewiderstand ist ein stromführendes Element innerhalb eines Stromkreises bzw. Stromnetzes, welches neben der Funktion und Funktionsweise eines Vorladewiderstands noch weitere Funktionen als kombiniertes Funktionselement aufweisen kann.

Eine Fortführung des erfindungsgemäßen Konzepts kann darin bestehen, dass das Stromkreiselement in einem DC-Stromverteilungsnetz oder in einem Hybridnetz angeordnet ist. Hybridnetze sind Wechselspannungsnetze mit darin angeordneten Gleichspannungsnetzbereichen.

Eine spezielle Ausgestaltung dieses erfindungsgemäßen Konzepts kann darin bestehen, dass die Steuerungseinheit die Messwerte über eine gestufte Überwachung in gleichmäßig langen oder unterschiedlich langen Zeitabschnitten aufnimmt und auswertet.

Eine Erweiterung einer speziellen Ausgestaltung des erfindungsgemäßen Konzepts kann vorsehen, dass die Steuerungseinheit über ein integriertes oder zusätzliches Messgerät direkte Messwerte zum messenden DC-Strom ermittelt und auswertet.

Ein vorteilhafter zusätzlicher Aspekt des erfindungsgemäßen Konzepts kann darin bestehen, dass die Steuerungseinheit über das Messgerät Messwerte zur Eingangs- und Ausgangsspannung aufnimmt und auswertet, so dass über das Ohmsche Gesetz der DC-Strom zu berechnen ist.

Eine Fortführung des erfindungsgemäßen Konzepts kann darin bestehen, dass die Steuerungseinheit mittels des Messgeräts Messwerte für eine integrale Überwachung aufnimmt und auswertet, wobei über die Verlustleistung des Stromkreiselements mit funktionaler Ausrichtung als Vorladewiderstand integriert wird und mit einem Maximalwert verglichen wird.

Eine spezielle Ausgestaltung des erfindungsgemäßen Konzepts kann darin bestehen, dass die Steuerungseinheit über ein Messgerät Temperaturmessungen im Stromkreiselement mit mindestens einer funktionalen Ausrichtung als Vorladewiderstand aufnimmt und auswertet.

Eine Erweiterung einer speziellen Ausgestaltung des erfindungsgemäßen Konzepts kann vorsehen, dass die Vorladung des Stromkreiselements mit mindestens einer funktionalen Ausrichtung als Vorladewiderstand unidirektional ausgebildet ist, so dass $I_{DC} > 0$ ist.

Ein vorteilhafter zusätzlicher Aspekt des erfindungsgemäßen Konzepts kann darin bestehen, dass die Vorladung des Stromkreiselements mit mindestens einer funktionalen Ausrichtung als Vorladewiderstand bidirektional ausgebildet ist, so dass $|I_{DC}|$ überprüft wird.

Eine Fortführung des erfindungsgemäßen Konzepts kann darin bestehen, dass das Stromkreiselement mit mindestens einer funktionalen Ausrichtung als Vorladewiderstand in Reihe zu einem Leistungspfad geschaltet ist.

Erfindungsgemäß wird die Aufgabe außerdem durch ein Schaltbild, insbesondere einer Schutzschaltung mit einem ansteuerbaren Stromkreiselement mit mindestens einer funktionalen Ausrichtung als Vorladewiderstand, insbesondere gemäß der obigen Ausführung (siehe hierzu die Ansprüche 1 bis 11) für die Verwendung in einem Stromverteilungsnetz gelöst, wobei das ansteuerbare Stromkreiselement innerhalb eines Stromverteilungsnetzes in Reihe zu einem Leistungspfad geschaltet ist und von einer vorgelagerten, übergeordneten und mit einem Überlastschutz für das Stromkreiselement ausgebildeten Steuerungseinheit, welche mittels eines Messgeräts Messwerte ermittelt und anschließend auswertet, anzusteuern ist.

In einer vorteilhaften Weiterentwicklung des erfindungsgemäßen Konzepts kann es vorgesehen sein, dass parallel zum Stromkreiselement mit mindestens einer funktionalen Ausrichtung als Vorladewiderstand ein Schalter im Schaltbild integriert ist.

Eine spezielle Ausgestaltung dieses erfindungsgemäßen Konzepts kann darin bestehen, dass das Schaltbild innerhalb eines DC-Stromverteilungsnetzes oder eines Hybridnetzes ausgebildet ist bzw. verwendet wird.

Eine Erweiterung einer speziellen Ausgestaltung des erfindungsgemäßen Konzepts kann vorsehen, dass der Überlastschutz mittels über Messungen in Form einer gestuften Überwachung in gleichmäßig langen oder unterschiedlich langen Zeitabschnitten und einer Auswertung in der Steuerungseinheit ausgebildet ist.

Ein vorteilhafter zusätzlicher Aspekt des erfindungsgemäßen Konzepts kann darin bestehen, dass die Steuerungseinheit mittels des Messgeräts zur Aufnahme und Auswertung direkt ermittelter DC-Strommessungen ausgebildet ist.

Eine Fortführung des erfindungsgemäßen Konzepts kann darin bestehen, dass die Steuerungseinheit mittels des Messgeräts Messwerte zur Eingangs- und Ausgangsspannung aufnimmt und auswertet, so dass über das Ohmsche Gesetz der DC-Strom zu berechnen ist.

In einer speziellen Ausführungsform kann es vorteilhaft sein, dass die Steuerungseinheit mittels des Messgeräts Messwerte für eine integrale Überwachung aufnimmt und auswertet, wobei über die Verlustleistung des Stromkreiselements mit mindestens einer funktionalen Ausrichtung als Vorladewiderstand integriert wird und mit einem Maximalwert verglichen wird.

Eine spezielle Ausgestaltung dieses erfindungsgemäßen Konzepts kann darin bestehen, dass die Steuerungseinheit mittels eines Messgeräts Temperaturmesswerte im Stromkreiselement mit mindestens einer funktionalen Ausrichtung als Vorladewiderstand aufnimmt und auswertet.

Eine Erweiterung einer speziellen Ausgestaltung des erfindungsgemäßen Konzepts kann vorsehen, dass die Vorladung des Stromkreiselements mit mindestens einer funktionalen Ausrichtung als Vorladewiderstand unidirektional ausgebildet ist, so dass $I_{DC} > 0$ ist.

Eine Fortführung des erfindungsgemäßen Konzepts kann darin bestehen, dass die Vorladung des Stromkreiselements mit mindestens einer funktionalen Ausrichtung als Vorladewiderstand bidirektional ausgebildet ist, so dass $|I_{DC}|$ überprüft wird.

Erfindungsgemäß wird die Aufgabe außerdem durch ein Stromverteilungsnetz mit mindestens einem Lastabzweig gelöst, wobei in einem Leistungspfad eines Leistungsabzweigs ein ansteuerbares Stromkreiselement mit mindestens einer funktionalen Ausrichtung als Vorladewiderstand, insbesondere gemäß der obigen Ausführung (siehe hierzu die Ansprüche 1 bis 11) angeordnet ist, wobei der Schutz des Stromkreiselements vor Überlastung über eine Steuerungseinheit ausgebildet ist, welche über ein Messgerät Messwerte aufnimmt und diese Messwerte einem ordnungsgemäßen Vorladevorgang oder einer Überlastung zuordnet.

Ein vorteilhafter zusätzlicher Aspekt des erfindungsgemäßen Konzepts kann darin bestehen, dass das Stromverteilungsnetz ein DC-Netz oder ein Hybridnetz ist.

Eine spezielle Ausgestaltung des erfindungsgemäßen Konzepts kann darin bestehen, dass die Steuerungseinheit mittels des Messgeräts Messwerte in Form einer gestuften Überwachung in gleichmäßig langen oder unterschiedlich langen Zeitabschnitten aufnimmt und auswertet.

Eine Erweiterung einer speziellen Ausgestaltung des erfindungsgemäßen Konzepts kann vorsehen, dass die Steuerungseinheit mittels des Messgeräts zur Aufnahme und Auswertung direkt gemessener DC-Strommesswerte ausgebildet ist.

Eine Fortführung des erfindungsgemäßen Konzepts kann darin bestehen, dass die Steuerungseinheit mittels des Messgeräts Messwerte zur Eingangs- und Ausgangsspannung aufnimmt und auswertet, so dass über das Ohmsche Gesetz der DC-Strom zu berechnen ist.

Ein vorteilhafter zusätzlicher Aspekt des erfindungsgemäßen Konzepts kann darin bestehen, dass die Steuerungseinheit mittels des Messgeräts Messwerte für eine integrale Überwachung aufnimmt und auswertet, wobei über die Verlustleistung des Stromkreiselements mit mindestens einer funktionalen Ausrichtung als Vorladewiderstand integriert wird und mit einem Maximalwert verglichen wird.

In einer speziellen Ausführungsform kann es vorteilhaft sein, dass die Steuerungseinheit mittels des Messgeräts Temperaturmesswerte im Stromkreiselement mit mindestens einer funktionalen Ausrichtung als Vorladewiderstand aufnimmt und auswertet.

Eine spezielle Ausgestaltung des erfindungsgemäßen Konzepts kann darin bestehen, dass die Vorladung des Stromkreiselements mit mindestens einer funktionalen Ausrichtung als Vorladewiderstand unidirektional ausgebildet ist, so dass $I_{DC} > 0$ ist.

Eine Erweiterung dieser speziellen Ausgestaltung des erfindungsgemäßen Konzepts kann vorsehen, dass die Vorladung des Stromkreiselements mit mindestens einer funktionalen Ausrichtung als Vorladewiderstand bidirektional ausgebildet ist, so dass $|I_{DC}|$ überprüft wird.

Eine Fortführung des erfindungsgemäßen Konzepts kann darin bestehen, dass das Stromkreiselement mit mindestens einer funktionalen Ausrichtung als Vorladewiderstand in Reihe zum Leistungspfad geschaltet ist.

Erfindungsgemäß wird die Aufgabe zudem durch ein Verfahren zum Schutz eines ansteuerbaren Stromkreiselements mit mindestens einer funktionalen Ausrichtung als Vorladewiderstand, insbesondere in einer Anwendung in einem Stromverteilungsnetz gelöst mit den Schritten:

- Schalten eines Stromkreiselements mit mindestens einer funktionalen Ausrichtung als Vorladewiderstand im Stromverteilungsnetz in Reihe zu einem Leitungspfad;
- Ansteuern des Stromkreiselements über eine vorgelagerte, übergeordnete Steuerungseinheit mit integriertem oder zusätzlichem Messgerät;
- Messen und registrieren von Messwerten über das in der Steuerungseinheit integrierte oder zusätzliche Messgerät;
- Auswerten der Messwerte über die Steuerungseinheit und
- Zuordnen der Messwerte zu einem ordnungsgemäßen Vorladevorgang oder zu einer Überlastung.

In einer speziellen Ausführungsform kann es vorteilhaft sein, dass die Messwerte mittels einer gestuften Überwachung in gleichmäßig langen oder unterschiedlich langen Zeitabschnitten aufgenommen und anschließend ausgewertet werden.

Eine spezielle Ausgestaltung dieses erfindungsgemäßen Verfahrens kann darin bestehen, dass die Messwerte durch eine direkte Messung des DC-Stroms ermittelt werden.

Eine Erweiterung einer speziellen Ausgestaltung des erfindungsgemäßen Verfahrens kann vorsehen, dass die Messwerte durch Messung der Eingangs- und Ausgangsspannung ermittelt werden, so dass über das Ohmsche Gesetz der DC-Strom zu berechnen ist.

Eine Fortführung des erfindungsgemäßen Konzepts kann darin bestehen, dass die Messwerte für eine integrale Überwachung aufgenommen werden, wobei über die Verlustleistung des Stromkreiselements mit mindestens funktionaler Ausrichtung als Vorladewiderstand integriert wird und mit einem Maximalwert verglichen wird.

In einer speziellen Ausführungsform kann es vorteilhaft sein, dass Temperaturmesswerte des Stromkreiselements mit mindestens einer funktionalen Ausrichtung als Vorladewiderstand aufgenommen und ausgewertet werden.

Es kann zudem vorteilhaft sein, dass mittels einer Kombination unterschiedlicher Messauswertungen, welche der Auswertungen des direkten DC-Strom und/oder der Eingangs- und Ausgangsspannung und/oder der integralen Überwachung über die Verlustleistung und/oder der Temperatur im Stromkreiselement entsprechen, eine Zuordnung der ermittelten Messwerte zu einem ordnungsgemäßen Vorladevorgang oder zu einer Überlastung getroffen wird.
Eine spezielle Ausgestaltung des erfindungsgemäßen Konzepts kann darin bestehen, dass die Vorladung des Stromkreiselements mit mindestens einer funktionalen Ausrichtung als Vorladewiderstand unidirektional durchgeführt wird, so dass $I_{DC} > 0$ ist.

Eine Erweiterung einer speziellen Ausgestaltung des erfindungsgemäßen Konzepts kann vorsehen, dass die Vorladung des Stromkreiselements mit mindestens einer funktionalen Ausrichtung als Vorladewiderstand bidirektional durchgeführt wird, so dass $|I_{DC}|$ überprüft wird.

Erfindungsgemäß wird die Aufgabe zusätzlich durch die Verwendung eines ansteuerbaren Stromkreiselements mit mindestens einer funktionalen Ausrichtung als Vorladewiderstand nach einem der Ansprüche 1 bis 11 in einem Schaltbild nach einem der Ansprüche 12 bis 21 sowie in einem Stromverteilungsnetz nach den Ansprüchen 22 bis 31 in einer Automatisierungsanlage gelöst.

Erfindungsgemäß wird die Aufgabe ebenso durch die Verwendung eines ansteuerbaren Stromkreiselements mit mindestens einer funktionalen Ausrichtung als Vorladewiderstand nach einem der Ansprüche 1 bis 11 in einem Schaltbild nach einem der Ansprüche 12 bis 21 sowie in einem Stromverteilungsnetz nach den Ansprüchen 22 bis 31 in der Antriebstechnik gelöst.

Erfindungsgemäß wird die Aufgabe insbesondere durch die Verwendung eines ansteuerbaren Stromkreiselements mit mindestens einer funktionalen Ausrichtung als Vorladewiderstand nach einem der Ansprüche 1 bis 11 in einem Schaltbild nach einem der Ansprüche 12 bis 21 sowie in einem Stromverteilungsnetz nach den Ansprüchen 22 bis 31 in der Leistungselektronik gelöst.

Das erfindungsgemäße ansteuerbare Stromkreiselement mit mindestens einer funktionalen Ausrichtung als Vorladewiderstand, insbesondere ein Vorladewiderstand, kann vorzugsweise als ohmscher Widerstand ausgebildet sein, welcher aus einer Mehrzahl in Reihe geschalteter Widerstände zusammengesetzt ist. Dem erfindungsgemäßen Stromkreiselement ist ein Energiespeichermedium, insbesondere ein Kondensator nachgeschaltet.

Vorteilhafterweise baut man die Vorladeschaltung parallel zu einem ohnehin vorhandenen Schaltkontakt auf, der sich für den Schaltbetrieb in der Anlage befindet. Erfindungsgemäß kann es vorgesehen sein, dass gegebene Anforderungen an dieses Schaltelement wie z.B. galvanisches Trennen durch die Parallelschaltung weiterhin erfüllt sind. Es entspricht dem Konzept der Erfindung während des Anlagenbetriebs fortwährend zu gewährleisten, dass die Vorladekomponenten auch auf den dahinter liegenden Kondensator abgestimmt sind, auch nachdem z.B. ein solcher Kondensator ausgetauscht wurde. Zudem muss gewährleistet sein, dass eine übergeordnete Anlagensteuerung dafür sorgt, dass eine unter Umständen einzuhaltende maximale Anzahl an Vorladungszyklen pro Zeiteinheit eingehalten wird. Dies kann wichtig sein, wenn der Vorladewiderstand bei ungünstigen Anlagenbedingungen thermisch stärker belastet wird und Zeit zum wieder abkühlen benötigt.

Weitere Ausführungen und Vorteile der Erfindung werden nachfolgend anhand eines Ausführungsbeispiels sowie anhand der Zeichnung erläutert.

Dabei zeigt:

Fig. 1 ein Schaltbild aus dem Stand der Technik mit einem Vorladewiderstand, welcher in Reihe zu einem Leistungspfad geschaltet ist;

Fig. 2 ein Schaltbild nach Fig. 1 mit einem zusätzlichen, vor dem Vorladewiderstand in Reihe geschalteten Thermistor;

Fig. 3 eine erfindungsgemäße Schutzschaltung bzw. ein Schaltbild mit einem ansteuerbaren Stromkreiselement mit mindestens einer funktionalen Ausrichtung als Vorladewiderstand und einer vorgeschalteten Messeinrichtung;

Fig. 4 eine grafische Darstellung in Form eines Diagramms mit einer Auftragung Spannung gegen die Vorladezeit.

Fig. 1 zeigt ein Schaltbild aus dem Stand der Technik mit einem Vorladewiderstand 1, welcher in Reihe zu einem Leistungspfad, welcher einen Kondensator 2 und einen parallel geschalteten Widerstand 3 vorzugsweise in Form eines Verbrauchers aufweist, geschaltet ist. Parallel zum Vorladewiderstand 1 ist ein Schalter 4 im Schaltbild integriert. Über den Schalter 4 wird der Vorladewiederstand 1 überbrückt, wenn alle Kapazitäten ausreichend vorgeladen sind. Ein weiterer Schalter 5 ist vor der Parallelschaltung aus Vorladewiderstand 1 und Schalter 4 angeordnet. Bei dieser Vorgehensweise muss der Vorladewiderstand 1 für eine gewisse Verlustenergie ausgelegt werden. Die Verluste, die während der Vorladung entstehen sind besonders am Anfang groß, wenn die gesamte DC-Spannung über dem Widerstand abfällt, während er den Vorladestrom führt. Übersteigt der Wert der vorzuladenden Kapazität den Auslegungsfall oder liegt ein Kurzschluss im Vorladepfad vor, wird der Widerstand überlastet und überhitzt. Aus diesem Grund muss er gegen Überlastung geschützt werden.

In Fig. 2 ist das Schaltbild nach Fig. 1 mit einem zusätzlichen, vor dem Vorladewiderstand 1 in Reihe geschalteten Thermistor 6 dargestellt. Entsprechend dem bisherigen Stand der Technik werden Vorladewiderstände 1 hauptsächlich durch sogenannte Thermistoren 6 geschützt. Thermistoren 6 verändern ihren Widerstandswert in Abhängigkeit von der Temperatur und werden in Reihe zum Vorladewiderstand 1 geschaltet.

Sie schützen den Vorladewiderstand 1 dadurch, dass sie durch Eigenerwärmung bei einer Überlastung des Vorladenetzwerks ihren Widerstandswert soweit erhöhen, dass der Strom signifikant sinkt. Der Nachteil dieser Lösung besteht darin, dass einerseits ein zusätzliches Bauteil verbaut werden muss, welches die Fehleranfälligkeit erhöht, und andererseits die Vorladung nur durch nicht steuerbare Komponenten geschützt ist. Der Thermistor 6 muss dabei genau auf den Vorladewiderstand 1 abgestimmt sein, um diesen effektiv zu schützen. Er sollte zudem die Möglichkeit, große Kapazitäten vorzuladen, nicht begrenzen.

Ein weiterer großer Nachteil dieser Schaltung liegt darin, dass parallel zum vorzuladenden Kondensator 2 auch immer ein Widerstand 3 liegt. Dieser kann physikalisch als Entladekondensator der vorzuladenden Kondensatoren 2 vorliegen oder als Verbraucher, der am DC-Abzweig anliegt. Am Anfang des Vorladevorgangs ist der Thermistor 6 noch kalt und sein Widerstandswert somit gering. Zu Beginn der Vorladung ist der Kondensator 2 entladen und die gesamte Spannung fällt über dem Vorladewiderstand 1 ab. Daraus folgt ein hoher Strom. Zum Ende der Vorladung ist der Thermistor 6 warm, sein Widerstandswert ist dann erhöht. Die treibende Spannung über Thermistor 6 und Vorladewiderstand 1 ist aber nur noch gering, weil der Kondensator 2 fast vollständig geladen ist. Im Ergebnis fließt nun nur noch ein sehr kleiner Vorladestrom, so dass bis zur Beendigung des Vorladevorgangs viel Zeit vergehen kann. Im ungünstigsten Fall kann der Vorladevorgang nicht abgeschlossen werden. Der bisherige Stand der Technik weist demgemäß den Nachteil auf, dass ein Schutz des Vorladewiderstands zwar erforderlich ist, aber ein Thermistor für die normale Vorladung nachteilig ist, weil er gerade am Ende, wenn der Widerstand eher kleiner werden müsste, seinen Widerstandswert erhöht.

Fig. 3 zeigt ein erfindungsgemäßes Schaltbild, insbesondere eine Schutzschaltung mit einem ansteuerbaren Stromkreiselement mit mindestens einer funktionalen Ausrichtung als Vorladewiderstand und einer Messeinrichtung. Das Schaltbild weist ein ansteuerbares Stromkreiselement 7 mit mindestens einer funktionalen Ausrichtung als Vorladewiderstand auf, welches in Reihe zu einem Leistungspfad, welcher einen Kondensator 8 und einen parallel geschalteten Widerstand 9 bspw. in Form eines Verbrauchers aufweist, geschaltet ist. Parallel zum Stromkreiselement 7 ist ein Schalter 10 im Schaltbild integriert. Über den Schalter 10 wird das Stromkreiselement 7 überbrückt, wenn alle Kapazitäten ausreichend vorgeladen sind. Ein weiterer Schalter 11 ist vor der Parallelschaltung aus Stromkreiselement 7 und Schalter 10 angeordnet. Vor dem Schalter 11 ist ein Messgerät 12, welches vorzugsweise den DC-Strom oder die Eingangs- und Ausgangsspannung oder Ähnliches misst, im Schaltbild angeordnet.

Fig. 4 zeigt eine grafische Darstellung in Form eines Diagramms, wobei die Spannung gegen die Vorladezeit aufgetragen ist. Da der Vorladewiderstand von einer übergeordneten Steuerung geschaltet werden kann, kann diese mit Hilfe von Messungen auch für den notwendigen Schutz des Vorladewiderstands aufkommen.

Als Messungen kommen hier der DC-Strom oder die Eingangs- und Ausgangsspannung in Frage. Aus der Eingangs- und Ausgangsspannung kann über das Ohm'sche Gesetz entsprechend auch der DC-Strom berechnet werden:

$$I(t) = (U_{ein}(t) - U_{aus}(t))/RV$$

Mit dieser Information kann die Steuerung entscheiden, ob es sich um einen normalen Vorladevorgang handelt oder der Vorladewiderstand überlastet ist.

Die einfachste Ausführung einer solchen Überprüfung betrachtet nach einer gewissen Zeit entsprechend der grafischen Darstellung aus Fig. 4, in der die Vorladung normalerweise abgeschlossen sein sollte, ob der Stromfluss weiterhin größer ist als ein vorgegebener Wert. Etwas aufwendigere Ausführungen überprüfen in unterschiedlichen Zeitschritten, ob ein Stromfluss jeweils unter einem getrennt vorgegebenen Wert liegt.

Gemäß der grafischen Darstellung aus Fig. 4 wird nach einer halben Sekunde überprüft, ob der Stromfluss bereits um mindestens 10% gesunken ist, bzw. die Spannung der vorzuladenden Seite auf mindestens 10% gestiegen ist. Weitere Messungen können sich nach 4,5 Sekunden bei 50% oder nach 20 Sekunden bei 96% ergeben. Ist der Stromfluss zu einem beliebigen Zeitpunkt größer bzw. die zu betrachtende Spannung kleiner als der vorgegebene Wert, wird die Vorladung abgebrochen.

Das erfindungsgemäße ansteuerbare Stromkreiselement mit mindestens einer funktionalen Ausrichtung als Vorladewiderstand, insbesondere ein Vorladewiederstand zeichnet sich dadurch aus, dass der Vorladewiderstand bzw. das erfindungsgemäße Stromkreiselement nicht mehr durch Thermistoren geschützt wird, welche die Vorladung stark limitieren, sondern durch eine digitale Steuerung. Dies beinhaltet den positiven Effekt, dass der Vorladewiderstand besser genutzt und geschützt wird. Bei Umsetzung dieses digitalen Konzepts in einem DC-Schalter bietet sich weiterhin der Vorteil, dass zusätzliche Informationen über das DC-Netz gewonnen werden können wie beispielsweise die verbaute Kapazität.

Bezugszeichenliste

| | |
|---|---|
| 1 | Vorladewiderstand |
| 2 | Kondensator |
| 3 | Widerstand |
| 4 | Schalter |
| 5 | Schalter |
| 6 | Thermistor |
| 7 | Ansteuerbares Stromkreiselement mit mindestens einer funktionalen Ausrichtung als Vorladewiderstand |
| 8 | Kondensator |
| 9 | Widerstand |
| 10 | Schalter |
| 11 | Schalter |
| 12 | Messgerät |

## Patentansprüche

1. Ansteuerbares Stromkreiselement mit mindestens einer funktionalen Ausrichtung als Vorladewiderstand (7), insbesondere für die Verwendung in einem Stromverteilungsnetz, wobei der Schutz des Stromkreiselements (7) vor Überlastung durch eine übergeordnete Steuerungseinheit ausgebildet ist, welche mittels eines Messgeräts Messwerte aufnimmt und diese Messwerte einem ordnungsgemäßen Vorladevorgang oder einer Überlastung zuordnet.

2. Ansteuerbares Stromkreiselement (7) nach Anspruch 1, **dadurch gekennzeichnet, dass** das Stromkreiselement mit mindestens einer funktionalen Ausrichtung als Vorladewiderstand (7) weitere Funktionen innerhalb eines Schaltbildes oder Stromverteilungsnetzes aufweist, insbesondere als Messgerät, Verbraucher, Prosumer, Umrichter oder Ähnliches.

3. Ansteuerbares Stromkreiselement (7) nach Anspruch 1 oder 2, **dadurch gekennzeichnet, dass** das Stromkreiselement (7) in einem DC-Stromverteilungsnetz oder in einem Hybridnetz angeordnet ist.

4. Ansteuerbares Stromkreiselement (7) nach einem der Ansprüche 1 bis 3, **dadurch gekennzeichnet, dass** die Steuerungseinheit die Messwerte über eine gestufte Überwachung in gleichmäßig langen oder unterschiedlich langen Zeitabschnitten aufnimmt und auswertet.

5. Ansteuerbares Stromkreiselement (7) nach einem der Ansprüche 1 bis 4, **dadurch gekennzeichnet, dass** die Steuerungseinheit über ein integriertes oder zusätzliches Messgerät (12) direkte Messwerte zum zu messenden DC-Strom ermittelt und auswertet.

6. Ansteuerbares Stromkreiselement (7) nach einem der Ansprüche 1 bis 4, **dadurch gekennzeichnet, dass** die Steuerungseinheit über eine integriertes oder zusätzliches Messgerät (12) Messwerte zur Eingangs- und Ausgangsspannung aufnimmt und auswertet, so dass über das Ohmsche Gesetz der DC-Strom zu berechnen ist.

7. Ansteuerbares Stromkreiselement (7) nach einem der Ansprüche 1 bis 4, **dadurch gekennzeichnet, dass** die Steuerungseinheit mittels des Messgeräts (12) Messwerte für eine integrale Überwachung aufnimmt und auswertet, wobei über die Verlustleistung des Stromkreiselements mit funktionaler Ausrichtung als Vorladewiderstand (7) integriert wird und mit einem Maximalwert verglichen wird.

8. Ansteuerbares Stromkreiselement (7) nach einem der Ansprüche 1 bis 4, **dadurch gekennzeichnet, dass** die Steuerungseinheit über ein Messgerät Temperaturmesswerte im Stromkreiselement mit mindestens einer funktionalen Ausrichtung als Vorladewiderstand aufnimmt und auswertet.

9. Ansteuerbares Stromkreiselement (7) nach einem der Ansprüche 1 bis 8, **dadurch gekennzeichnet, dass** die Vorladung des Stromkreiselements mit mindestens einer funktionalen Ausrichtung als Vorladewiderstand (7) unidirektional ausgebildet ist, so dass $I_{DC} > 0$ ist.

10. Ansteuerbares Stromkreiselement (7) nach einem der Ansprüche 1 bis 8, **dadurch gekennzeichnet, dass** die Vorladung des Stromkreiselements mit mindestens einer funktionalen Ausrichtung als Vorladewiderstand bidirektional ausgebildet ist, so dass $|I_{DC}|$ überprüft wird.

11. Ansteuerbares Stromkreiselement (7) nach einem der Ansprüche 1 bis 10, **dadurch gekennzeichnet, dass** das Stromkreiselement mit mindestens einer funktionalen Ausrichtung als Vorladewiderstand (7) in Reihe zu einem Leistungspfad geschaltet ist.

12. Schaltbild, insbesondere eine Schutzschaltung mit einem ansteuerbaren Stromkreiselement mit mindestens einer funktionalen Ausrichtung als Vorladewiderstand (7), insbesondere für die Verwendung in einem Stromverteilungsnetz, wobei das ansteuerbare Stromkreiselement innerhalb eines Stromverteilungsnetzes in Reihe zu einem Leistungspfad geschaltet ist und von einer vorgelagerten, übergeordneten und mit einem Überlastschutz für das Stromkreiselement (7) ausgebildeten Steuerungseinheit, welche über ein Messgerät (12) Messwerte ermittelt und anschließend auswertet, anzusteuern ist.

13. Schaltbild nach Anspruch 12, **dadurch gekennzeichnet, dass** parallel zum Stromkreiselement mit mindestens einer funktionalen Ausrichtung als Vorladewiderstand (7) ein Schalter (10) im Schaltbild integriert ist.

14. Schaltbild nach Anspruch 12 oder 13, **dadurch gekennzeichnet, dass** das Schaltbild innerhalb eines DC-Stromverteilungsnetzes oder eines Hybridnetzes ausgebildet ist.

15. Schaltbild nach einem der Ansprüche 12 bis 14 **dadurch gekennzeichnet, dass** der Überlastschutz mittels Messungen in Form einer gestuften Überwachung in gleichmäßig langen oder unterschiedlich langen Zeitabschnitten und einer Auswertung in der Steuerungseinheit ausgebildet ist.

16. Schaltbild nach Anspruch 15, **dadurch gekennzeichnet, dass** die Steuerungseinheit mittels des Messgeräts (12) zur Aufnahme und Auswertung direkt ermittelter DC-Strommessungen ausgebildet ist.

17. Schaltbild nach Anspruch 15, **dadurch gekennzeichnet, dass** die Steuerungseinheit mittels des Messgeräts (12) Messwerte zur Eingangs- und Ausgangsspannung aufnimmt und auswertet, so dass über das Ohmsche Gesetz der DC-Strom zu berechnen ist.

18. Schaltbild nach Anspruch 15, **dadurch gekennzeichnet, dass** die Steuerungseinheit mittels des Messgeräts (12) Messwerte für eine integrale Überwachung aufnimmt und auswertet, wobei über die Verlustleistung des Stromkreiselements mit mindestens einer funktionalen Ausrichtung als Vorladewiderstand (7) integriert wird und mit einem Maximalwert verglichen wird.

19. Schaltbild nach Anspruch 15, **dadurch gekennzeichnet, dass** die Steuerungseinheit mittels eines Messgeräts Temperaturmesswerte im Stromkreiselement mit mindestens einer funktionalen Ausrichtung als Vorladewiderstand (7) aufnimmt und auswertet.

20. Schaltbild nach einem der Ansprüche 12 bis 19, **dadurch gekennzeichnet, dass** die Vorladung des Stromkreiselements mit mindestens einer funktionalen Ausrichtung als Vorladewiderstand (7) unidirektional ausgebildet ist, so dass $I_{DC} > 0$ ist.

21. Schaltbild nach einem der Ansprüche 12 bis 19, **dadurch gekennzeichnet, dass** die Vorladung des Stromkreiselements mit mindestens einer funktionalen Ausrichtung als Vorladewiderstand (7) bidirektional ausgebildet ist, so dass $|I_{DC}|$ überprüft wird.

22. Stromverteilungsnetz mit mindestens einem Lastabzweig, wobei in einem Leistungspfad eines Leistungsabzweigs ein ansteuerbares Stromkreiselement mit mindestens einer funktionalen Ausrichtung als Vorladewiderstand (7) angeordnet ist, wobei der Schutz des Stromkreiselements (7) vor Überlastung über eine Steuerungseinheit ausgebildet ist, welche über ein Messgerät (12) Messwerte aufnimmt und diese Messwerte einem ordnungsgemäßen Vorladevorgang oder einer Überlastung zuordnet.

23. Stromverteilungsnetz nach Anspruch 22, **dadurch gekennzeichnet, dass** das Stromverteilungsnetz ein DC-Netz oder ein Hybridnetz ist.

24. Stromverteilungsnetz nach Anspruch 22 oder 23, **dadurch gekennzeichnet, dass** die Steuerungseinheit mittels des Messgeräts (12) Messwerte in Form einer gestuften Überwachung in gleichmäßig langen oder unterschiedlich langen Zeitabschnitten aufnimmt und auswertet.

25. Stromverteilungsnetz nach einem der Ansprüche 22 bis 24, **dadurch gekennzeichnet**, die Steuerungseinheit mittels des Messgeräts (12) zur Aufnahme und Auswertung von direkt gemessenen DC-Strommesswerten ausgebildet ist.

26. Stromverteilungsnetz nach einem der Ansprüche 22 bis 24, **dadurch gekennzeichnet, dass** die Steuerungseinheit mittels des Messgeräts (12) Messwerte zur Eingangs- und Ausgangsspannung aufnimmt und auswertet, so dass über das Ohmsche Gesetz der DC-Strom zu berechnen ist.

27. Stromverteilungsnetz nach Anspruch 22 bis 24, **dadurch gekennzeichnet, dass** die Steuerungseinheit mittels des Messgeräts (12) Messwerte für eine integrale Überwachung aufnimmt und auswertet, wobei über die Verlustleistung des Stromkreiselements mit mindestens einer funktionalen Ausrichtung als Vorladewiderstand (7) integriert wird und mit einem Maximalwert verglichen wird.

28. Stromverteilungsnetz nach Anspruch 22 bis 24, **dadurch gekennzeichnet, dass** die Steuerungseinheit mittels des Messgeräts Temperaturmesswerte im Stromkreiselement mit mindestens einer funktionalen Ausrichtung als Vorladewiderstand (7) aufnimmt und auswertet.

29. Stromverteilungsnetz 22 bis 28, **dadurch gekennzeichnet, dass** die Vorladung des Stromkreiselements mit mindestens einer funktionalen Ausrichtung als Vorladewiderstand (7) unidirektional ausgebildet ist, so dass $I_{DC} > 0$ ist.

30. Stromverteilungsnetz nach einem der Ansprüche 22 bis 28, **dadurch gekennzeichnet, dass** die Vorladung des Stromkreiselements mit mindestens einer funktionalen Ausrichtung als Vorladewiderstand (7) bidirektional ausgebildet ist, so dass $|I_{DC}|$ überprüft wird.

31. Stromverteilungsnetz nach einem der Ansprüche 22 bis 30, **dadurch gekennzeichnet, dass** das Stromkreiselement mit mindestens einer funktionalen Ausrichtung als Vorladewiderstand (7) in Reihe zum Leistungspfad geschaltet ist.

32. Verfahren zum Schutz eines ansteuerbaren Stromkreiselements mit mindestens einer funktionalen Ausrichtung als Vorladewiderstand (7), insbesondere in einer Anwendung in einem Stromverteilungsnetz mit den Schritten:

    - Schalten eines Stromkreiselements mit mindestens einer funktionalen Ausrichtung als Vorladewiderstand (7) im Stromverteilungsnetz in Reihe zu einem Leitungspfad;
    - Ansteuern des Stromkreiselements (7) über eine vorgelagerte, übergeordnete Steuerungseinheit mit integriertem oder zusätzlichen Messgerät (12);
    - Messen und registrieren von Messwerten über das in der Steuerungseinheit integrierte oder zusätzliche Messgerät (12);
    - Auswerten der Messwerte über die Steuerungseinheit und
    - Zuordnen der Messwerte zu einem ordnungsgemäßen Vorladevorgang oder zu einer Überlastung.

**33.** Verfahren nach Anspruch 32, **dadurch gekennzeichnet, dass** die Messwerte mittels einer gestuften Überwachung in gleichmäßig langen oder unterschiedlich langen Zeitabschnitten aufgenommen und anschließend ausgewertet werden.

**34.** Verfahren nach Anspruch 32 oder 33, **dadurch gekennzeichnet, dass** die Messwerte durch eine direkte Messung des DC-Stroms ermittelt werden.

**35.** Verfahren nach Anspruch 32 oder 33, **dadurch gekennzeichnet, dass** die Messwerte durch Messung der Eingangs- und Ausgangsspannung ermittelt werden, so dass über das Ohmsche Gesetz der DC-Strom zu berechnen ist.

**36.** Verfahren nach Anspruch 32 oder 33, **dadurch gekennzeichnet, dass** Messwerte für eine integrale Überwachung aufgenommen werden, wobei über die Verlustleistung des Stromkreiselements mit mindestens einer funktionalen Ausrichtung als Vorladewiderstand (7) integriert wird und mit einem Maximalwert verglichen wird.

**37.** Verfahren nach Anspruch 32 oder 33, **dadurch gekennzeichnet, dass** Temperaturmesswerte des Stromkreiselements mit mindestens einer funktionalen Ausrichtung als Vorladewiderstand (7) aufgenommen und ausgewertet werden.

**38.** Verfahren nach einem der Ansprüche 32 bis 36, **dadurch gekennzeichnet, dass** mittels einer Kombination unterschiedlicher Messauswertungen, welche der Auswertungen des direkten DC-Strom und/oder der Eingangs- und Ausgangsspannung und/oder der integralen Überwachung über die Verlustleistung und/oder der Temperatur im Stromkreiselement (7) entsprechen, eine Zuordnung der ermittelten Messwerte zu einem ordnungsgemäßen Vorladevorgang oder zu einer Überlastung getroffen wird.

**39.** Verfahren nach einem der Ansprüche 30 bis 35, **dadurch gekennzeichnet, dass** die Vorladung des Stromkreiselements mit mindestens einer funktionalen Ausrichtung als Vorladewiderstand (7) unidirektional durchgeführt wird, so dass $I_{DC} > I$ ist.

**40.** Verfahren nach einem der Ansprüche 30 bis 35, **dadurch gekennzeichnet, dass** die Vorladung des Stromkreiselements mit mindestens einer funktionalen Ausrichtung als Vorladewiderstand (7) bidirektional durchgeführt wird, so dass $|I_{DC}|$ überprüft wird.

**41.** Verwendung eines ansteuerbaren Stromkreiselements mit mindestens einer funktionalen Ausrichtung als Vorladewiderstand (7) nach einem der Ansprüche 1 bis 11 in einem Schaltbild nach einem der Ansprüche 12 bis 21 sowie in einem Stromverteilungsnetz nach den Ansprüchen 22 bis 31 in einer Automatisierungsanlage.

**42.** Verwendung eines ansteuerbaren Stromkreiselements mit mindestens einer funktionalen Ausrichtung als Vorladewiderstand (7) nach einem der Ansprüche 1 bis 11 in einem Schaltbild nach einem der Ansprüche 12 bis 21 sowie in einem Stromverteilungsnetz nach den Ansprüchen 22 bis 31 in der Antriebstechnik.

**43.** Verwendung eines ansteuerbaren Stromkreiselements mit mindestens einer funktionalen Ausrichtung als Vorladewiderstand (7) nach einem der Ansprüche 1 bis 11 in einem Schaltbild nach einem der Ansprüche 12 bis 21 sowie in einem Stromverteilungsnetz nach den Ansprüchen 22 bis 31 in der Leistungselektronik.

FIG 1

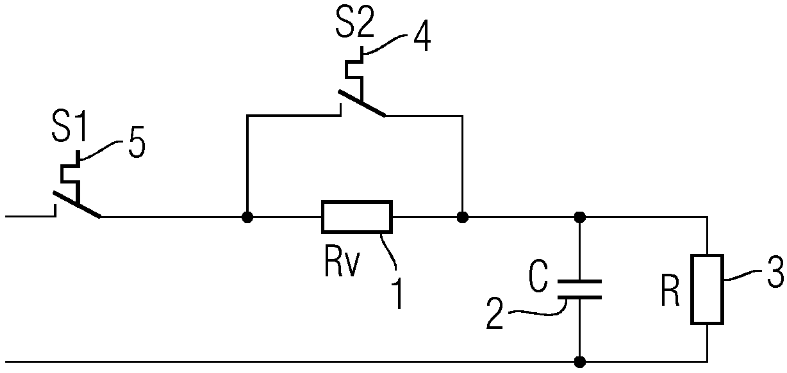


FIG 2

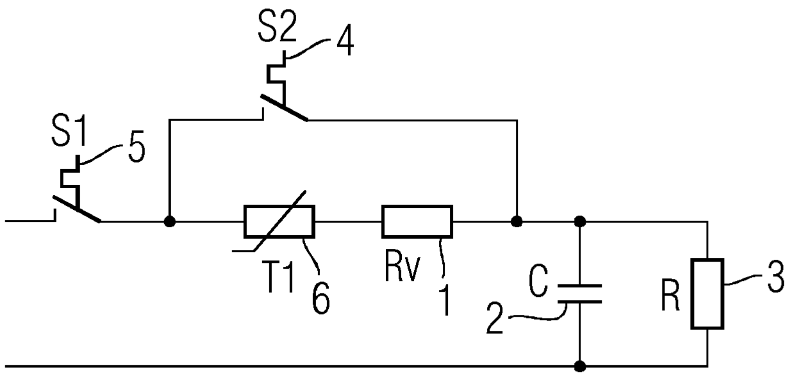


FIG 3

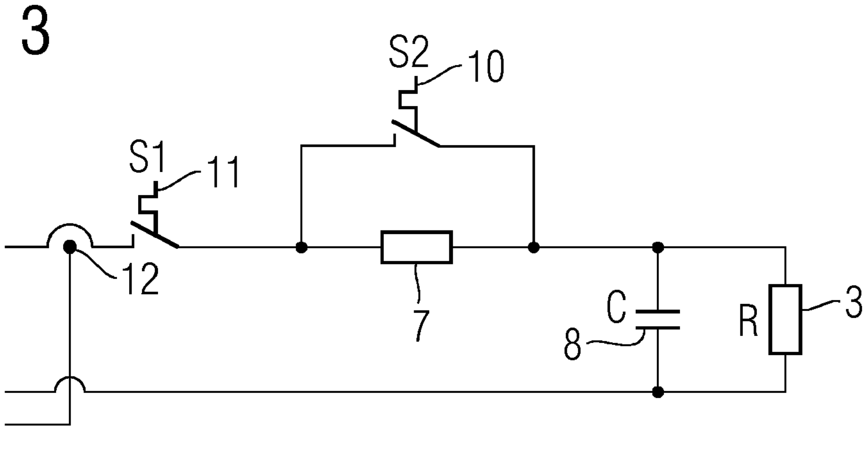

FIG 4

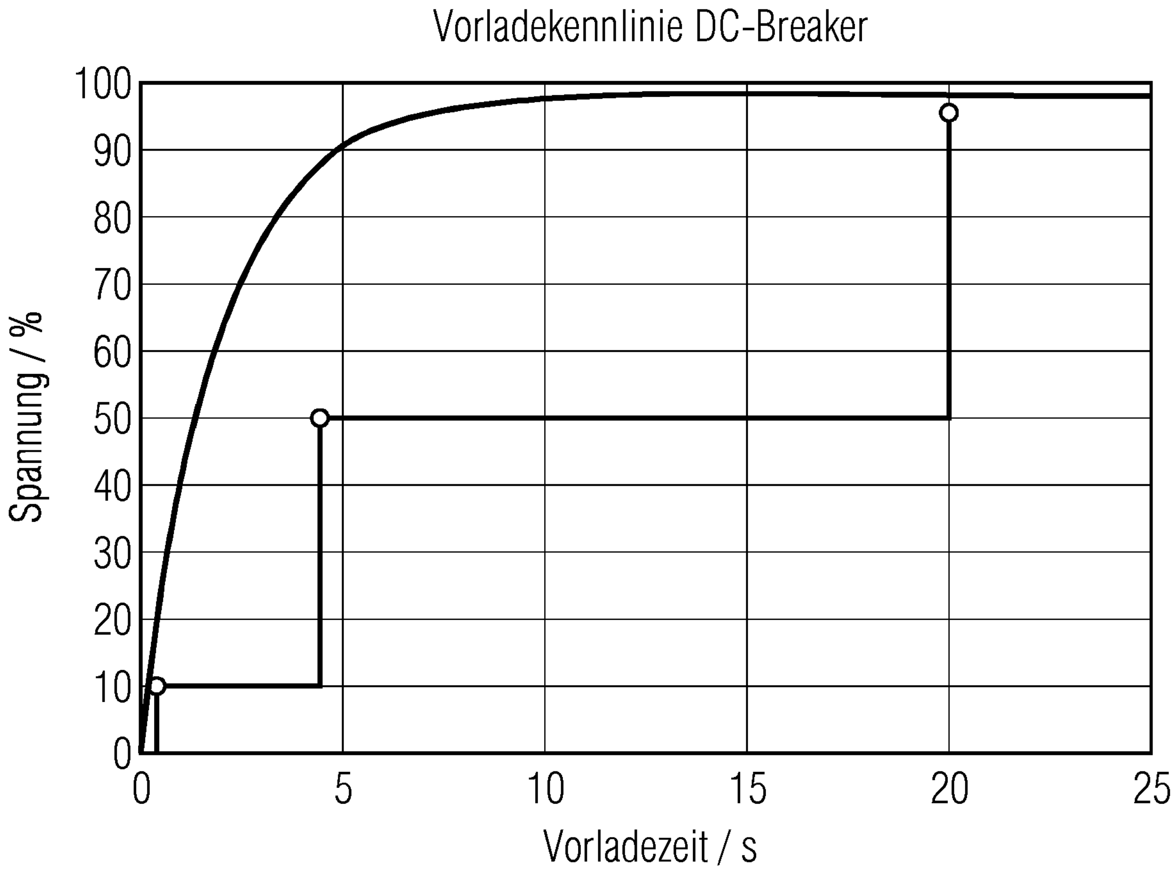
Vorladekennlinie DC-Breaker
Spannung / %
100
90
80
70
60
50
40
30
20
10
0
0
5
10
15
20
25
Vorladezeit / s

Europäisches Patentamt
European Patent Office
Office européen des brevets

# EUROPÄISCHER RECHERCHENBERICHT

Nummer der Anmeldung
EP 18 20 6787

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 508 418 A (CONTROL TECH LTD [GB]) 4. Juni 2014 (2014-06-04)<br>* Zusammenfassung; Abbildungen 1-7 *<br>* Seite 2, Zeile 6 - Seite 3, Zeile 14 *<br>* Seite 5, Zeile 25 - Seite 10, Zeile 25 *<br>* Seite 13, Zeile 23 - Seite 14, Zeile 7 *<br>----- | 1-5,9, 11-16, 20, 22-25, 29, 31-35, 38,39, 41-43 | INV.<br>H02H9/00 |
| X | WO 2013/160067 A2 (VOLKSWAGEN AG [DE]) 31. Oktober 2013 (2013-10-31)<br>* Zusammenfassung; Abbildungen 1-2 *<br>* Seite 2, Zeile 20 - Seite 4, Zeile 4 *<br>----- | 1,3-8, 10-19, 21-28, 30-38, 40-43 | |
| X | JP 2008 022675 A (HONDA MOTOR CO LTD) 31. Januar 2008 (2008-01-31)<br>* das ganze Dokument *<br>----- | 1,3-8, 10-19, 21-28, 30-38, 40-43 | RECHERCHIERTE SACHGEBIETE (IPC)<br>H02H<br>B60L |
| X | US 2008/092258 A1 (CLARKE SEAN S [US] ET AL) 17. April 2008 (2008-04-17)<br>* Zusammenfassung; Abbildungen 1-3 *<br>* Absätze [0023] - [0029], [0043] - [0045] *<br>----- | 1,3,4,6, 10-15, 17, 21-24, 26, 30-34, 38,40-43 | |

Der vorliegende Recherchenbericht wurde für alle Patentansprüche erstellt

2

| Recherchenort | Abschlußdatum der Recherche | Prüfer |
|---|---|---|
| München | 20. Mai 2019 | Palukova, Mila |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 20 6787

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-05-2019

| Im Recherchenbericht angeführtes Patentdokument | Datum der Veröffentlichung | Mitglied(er) der Patentfamilie | Datum der Veröffentlichung |
|---|---|---|---|
| GB 2508418 A | 04-06-2014 | CN 103856082 A | 11-06-2014 |
| | | CN 203674997 U | 25-06-2014 |
| | | GB 2508418 A | 04-06-2014 |
| | | US 2014153308 A1 | 05-06-2014 |
| WO 2013160067 A2 | 31-10-2013 | DE 102012008626 A1 | 31-10-2013 |
| | | WO 2013160067 A2 | 31-10-2013 |
| JP 2008022675 A | 31-01-2008 | JP 4668138 B2 | 13-04-2011 |
| | | JP 2008022675 A | 31-01-2008 |
| US 2008092258 A1 | 17-04-2008 | CN 101162793 A | 16-04-2008 |
| | | DE 102007048620 A1 | 24-04-2008 |
| | | US 2008092258 A1 | 17-04-2008 |

EPO FORM P0461

Für nähere Einzelheiten zu diesem Anhang : siehe Amtsblatt des Europäischen Patentamts, Nr.12/82